# FASCICULE DE BREVET EUROPEEN

(11) **EP 1 737 700 B1**
(45) Date de publication et mention de la délivrance du brevet: **24.06.2009**
(21) Numéro de dépôt: 05717517.6
(22) Date de dépôt: 31.01.2005
(51) Int. Cl.: B60N 2/58, B68G 7/052

(54) **REVETEMENT MATELASSE POUR SIEGE**
GEPOLSTERTER STUHLBEZUG
PADDED COVERING FOR A CHAIR

(30) Priorité: 22.04.2004 FR 0404299
(43) Date de publication de la demande: 03.01.2007
(73) Titulaire: STEELCASE SA, 67300 Schiltigheim (FR)
(72) Inventeur: AUBRIET, Cécile, F-67000 Strasbourg (FR); SCHNEIDER, Jean-Marc, F-57400 Sarrebourg (FR); MENEGHINI, Sylvain, F-57400 Sarrebourg (FR)
(74) Mandataire: Littolff, Denis
(86) Numéro de dépôt international: PCT/FR2005/000198
(87) Numéro de publication internationale: WO 2005/110807

(56) Documents cités:
- EP-A- 0 355 879
- EP-A- 0 791 555
- EP-A- 1 203 655
- WO-A-02/102585
- DE-B- 10 218 004
- PATENT ABSTRACTS OF JAPAN vol. 2002, no. 11, 6 novembre 2002 (2002-11-06) & JP 2002 211298 A (MAZDA MOTOR CORP), 31 juillet 2002 (2002-07-31)

## Description

La présente invention concerne d'une part un procédé de fabrication d'un revêtement matelassé destiné à recouvrir des parties de sièges par exemple du type dossiers, appuis-tête ou accotoirs, et d'autre part un procédé d'assemblage dudit revêtement matelassé à un support rigide ou semi-rigide formant l'ossature de ladite partie de siège. Enfin, l'invention concerne également le revêtement matelassé faisant l'objet des procédés ci-dessus, ainsi que les supports de parties de sièges recouverts de tels revêtements matelassés.

L'utilisation de revêtements matelassés pour recouvrir des parties de sièges est ancienne et a donné lieu à de nombreuses techniques dites de garnissage. Des revêtements matelassés de garnissage sont en particulier utilisés depuis longtemps dans le domaine des mobiliers de bureau, pour rendre les sièges plus confortables compte tenu de l'utilisation plus intensive qui en est généralement faite sur les lieux de travail.

Du document DE 102 18 004 on connait un procédé de fabrication d'un revêtement, qui comporte les caractéristiques du préambule de la revendication 1. De plus ce document montre un revêtement correspondant, qui comporte les caractéristiques du préambule de la revendication 5.

Le revêtement de l'invention est de manière traditionnelle basé sur un matériau matelassé présentant une élasticité au moins dans son épaisseur, par exemple du type mousse à structure tridimensionnelle. La structure même des matériaux employés dans l'invention, et notamment la texture du tissu qui, dans l'invention, vient recouvrir le matériau qui réalise le rembourrage présente cependant des avantages que n'avaient pas les garnitures utilisées jusqu'ici pour revêtir les sièges.

La manière dont les différents composants du revêtement de l'invention sont ensuite travaillés pour améliorer techniquement et économiquement le procédé de fabrication, puis faciliter son montage sur le siège, est également originale à plusieurs titres, et a des incidences sur le confort procuré à l'utilisateur.

Enfin, la structure des différents composants du revêtement de l'invention permet d'aboutir à un assemblage qui est particulièrement esthétique en lui-même, et qui offre par ailleurs de nombreuses possibilités de variations d'aspect en jouant très simplement sur les caractéristiques structurelles desdits composants.

En premier lieu, l'invention concerne comme indiqué ci-dessus un procédé de fabrication d'un revêtement matelassé destiné à recouvrir des parties de sièges, qui se caractérise en ce qu'il consiste à :
- découper, dans un matériau matelassé du type mousse tridimensionnelle présentant une élasticité au moins dans son épaisseur, une pièce de forme adaptée à revêtir la partie de siège à recouvrir ;
- coudre, au niveau des bordures de ladite pièce, au moins deux lignes concentriques sur toute la périphérie de la pièce, de manière à aplanir la zone de bordure ;
- découper, dans un tissu en mailles ajourées semi-transparent, une pièce de dimensions correspondant à celles de la pièce matelassée ;
- superposer la pièce en tissu semi-transparent sur la pièce matelassée ; et
- fixer la pièce en tissu semi-transparent sur la pièce matelassée au niveau de la zone aplanie de couture périphérique.

Sur un plan purement fabricationnel, l'existence de la zone aplanie en bordure dudit matériau matelassé permet de faciliter la fixation de la pièce en tissu semi-transparent parce qu'elle lui confère une plus grande stabilité structurelle. La zone couturée aboutit en effet à supprimer dans une large mesure l'épaisseur élastique du matériau matelassé, dont l'absence de rigidité rendrait délicate une opération traditionnelle de fixation d'un revêtement en tissu, dans la mesure ou ladite fixation impose des contraintes qui vont à l'encontre de l'élasticité de la matière.

De préférence, pour parfaire l'aplanissement de cette zone périphérique, la pièce matelassée est en réalité revêtue d'une pluralité de lignes de couture concentriques au niveau de ses bordures : leur nombre est en général choisi entre cinq et dix.

Plus la couverture de cette zone par les lignes de couture est complète ou serrée, plus elle est comprimée et stable, et donc apte à recevoir le tissu de couverture dans des bonnes conditions du point de vue de sa fixation.

Dans une optique strictement économique, lesdites conditions doivent évidemment tendre à rendre l'opération de fixation la plus rapide possible, ce qui n'est possible que si le terrain est correctement préparé pour l'intervention des moyens de fixation. La réduction de temps équivaut, en termes de process industriel, à une réduction de coût, et va donc dans le sens recherché.

Selon une possibilité, la pièce matelassée présente une structure tridimensionnelle basée sur des tubes adjacents s'étendant axialement selon l'épaisseur du matériau matelassé.

Cette structure, qui n'est pas nouvelle en soi, est très favorable à l'utilisation qui en est faite dans l'invention car, pour d'évidentes raisons de confort, les revêtements matelassés doivent à titre essentiel présenter une élasticité dans la direction de leur sollicitation, c'est-à-dire perpendiculairement à leur surface extérieure d'appui. Or, les tubes de la structure choisie, qui s'étendent dans la direction de l'épaisseur du matériau, s'orientent par conséquent également perpendiculairement à la surface d'appui, que le revêtement de l'invention soit utilisé dans un appui-tête, un dossier, un accotoir ou autre.

Toujours selon le procédé de l'invention, la pièce en tissu semi-transparent recouvre les bords libres des parois délimitant les tubes adjacents, au débouché des évidements que constituent ces tubes.

Cette caractéristique procure un triple avantage : sur un plan purement fonctionnel, les interstices créés par les mailles, qui ne sont en l'espèce pas serrées et présentent une configuration en "filet", sont par conséquent disposés aux débouchés desdits tubes. En d'autres termes, la pièce en tissu n'obstrue que partiellement les ouvertures desdits tubes et permet à la matière de "respirer" dans de meilleures conditions.

Les particules de poussière qui se déposent sur le tissu en maille de couverture et qui - selon la couleur de ce dernier - peuvent être très visibles, peuvent de plus être piégées à l'intérieur des tubes après franchissement dudit filet à mailles étroites.

Enfin, cette structure présente un aspect esthétique avantageux, car le tissu semi-transparent laisse apparaître la structure de la pièce tridimensionnelle matelassée, et laisse en particulier deviner la section des tubes adjacents. Selon la forme qui leur est donnée et les jeux de couleurs employés, l'ensemble procure à l'oeil une sensation de tridimensionnalité qui confère au produit un aspect indéniablement original.

De préférence, les bords libres des parois délimitant les tubes peuvent former des motifs adjacents identiques se répétant sur toute la surface à couvrir par le tissu semi-transparent. Plus précisément encore, lesdits motifs adjacents peuvent présenter une configuration en nid d'abeilles.

Cette structure en nid d'abeille pourra être au moins partiellement visible à travers la pièce en tissu, avec des nuances qui dépendront du choix de la couleur à la fois pour le revêtement en tissu maillé et pour le matériau synthétique formant la pièce matelassée. Il pourra ainsi être possible de créer des contrastes en prenant des couleurs qui s'opposent visuellement (par exemple noir pour le tissu en mailles, et blanc au moins pour les extrémités libres des tubes adjacents) voire faire ressortir des images ou des logos créés par colorisation de certains tubes.

La compression par couture des bordures de la pièce matelassée avant fixation du tissu en mailles n'a cependant pas que pour avantage de faciliter ladite fixation. Elle permet de plus la mise en oeuvre d'un procédé d'assemblage des revêtements matelassés ainsi fabriqués à des supports formant le coeur des éléments de siège auxquels ils s'appliquent.

L'invention concerne aussi un tel procédé d'assemblage d'un revêtement matelassé à une structure support rigide ou semi-rigide, par exemple pour dossier de siège, appui-tête ou accotoir, caractérisé en ce qu'il consiste à :
- fabriquer un revêtement matelassé présentant des lignes de couture périphériques dont la forme correspond sensiblement à celle du support, la ligne la plus interne étant localisée de façon qu'elle suive approximativement le contour dudit support ;
- disposer le revêtement matelassé sur la face recto du support à revêtir en le centrant à l'intérieur de la zone aplanie des lignes de couture ;
- replier les bordures aplanies par les lignes de couture autour des bords du support pour les plaquer contre le verso dudit support ;
- fixer lesdites bordures aplanies sur le verso du support.

La zone périphérique aplanie présente en fait une souplesse et une flexibilité largement accrues par rapport à la zone centrale, dans laquelle le matériau matelassé n'est pas affecté par les coutures. Cette flexibilité améliorée facilite l'exécution du repliage des bordures autour du support rigide, d'où l'importance que cette zone de plus grande flexibilité corresponde sensiblement au pourtour du support et qu'un centrage puisse être effectué par rapport à cette zone.

Améliorer la flexibilité par aplanissement de la bordure périphérique ne suffit cependant pas. Dans cette zone, la suppression de l'élasticité dans la direction de l'épaisseur rend le matériau inconfortable en cas d'appui. Par conséquent, il ne faut pas que ladite bordure aplanie s'étende sur une portion périphérique du recto du support, plus particulièrement voire exclusivement destiné à être revêtu du revêtement matelassé. Le centrage doit alors s'effectuer préférentiellement par rapport à la ligne de couture interne.

Les possibilités de fixation mécanique sur le verso du support sont bien entendu nombreuses. A titre préférentiel, selon l'invention, il est prévu que les bordures aplanies soient agrafées sur ledit verso.

Un tel agrafage constitue une opération facilement automatisable et rapide, et donc économiquement favorable.

L'invention concerne également un revêtement matelassé pour couvrir les parties de siège précitées, revêtement qui comporte les caractéristiques lui permettant de présenter les avantages cités auparavant et d'être mis en oeuvre dans les procédés décrits ci-dessus.

Pour mémoire, ce revêtement est principalement constitué d'un matériau matelassé présentant une élasticité au moins dans son épaisseur, par exemple de type mousse, recouvert d'un tissu en mailles ajourées semi-transparent, le matériau matelassé présentant une structure tridimensionnelle au moins partiellement visible à travers ledit tissu et comportant des évidements débouchant au contact du tissu.

De préférence, cette structure tridimensionnelle est constituée de tubes s'étendant axialement selon l'épaisseur du matériau et dont les bords libres disposés au contact du tissu en mailles forment des motifs identiques se développant sur toute la surface du matériau matelassé.

Encore une fois, outre l'avantage esthétique présenté par cette configuration, elle permet dans une certaine mesure de piéger des particules qui seraient sinon visibles sur le tissu revêtant les garnitures, et améliore la respirabilité du revêtement.

Selon une possibilité particulièrement adaptée, car elle aboutit à une tenue mécanique excellente, les motifs répétitifs des bords libres de la structure tubulaire peuvent former une configuration en nid d'abeilles.

Pour la mise en oeuvre des procédés précédemment envisagés, les bordures du matériau matelassé sont aplanies par au moins deux lignes concentriques de couture, le tissu à maille étant fixé audit matériau dans cette zone de couture.

L'aplanissement de la bordure périphérique, qui contribue de manière essentielle audit procédé, est bien entendu optimal s'il est basé sur une pluralité de lignes de couture. Un compromis doit cependant être trouvé entre l'efficacité mécanique, en principe d'autant plus élevée que le nombre de lignes est grand, et la nécessité économique qui impose à l'inverse une réduction de ce nombre. En pratique, le nombre des lignes est inférieur à une dizaine, en général compris entre cinq et dix, comme mentionné ci-dessus.

De préférence, la fixation du tissu à mailles sur le matériau matelassé est réalisée par soudage, par exemple par ultrasons.

Un tel moyen de fixation est parfaitement compatible avec les impératifs économiques qui sont privilégiés lors de la fabrication, puisqu'il est en particulier facilement automatisable.

L'invention concerne enfin des supports d'appui susceptibles de former des parties de sièges du type dossier, appui-tête ou accotoirs, caractérisés en ce qu'ils se composent :
- d'une structure support rigide ou semi-rigide,
- d'un matériau matelassé de type mousse doté d'une élasticité au moins dans son épaisseur, et présentant une structure tridimensionnelle pourvue d'évidements ;
- d'un tissu semi-transparent en mailles ajourées recouvrant une face du matériau matelassé, au contact des ouvertures desdits évidements ;
le matériau matelassé et le tissu semi-transparent formant un revêtement matelassé prévu pour revêtir un côté de la structure support.

La structure tridimensionnelle est celle du matériau matelassé, et elle est par conséquent constituée de tubes adjacents s'étendant axialement selon l'épaisseur du matériau, dont les bords libres délimitant les ouvertures forment des motifs identiques se répétant sur toute la surface du matériau matelassé en contact avec le tissu semi-transparent, pour constituer par exemple une configuration en nid d'abeilles.

Il a beaucoup été question de tissu à mailles semi-transparent. Il va cependant sans dire que ledit tissu, constituant le revêtement de protection externe des pièces matelassées ne doit pas être réalisé avec des mailles trop lâches car il ne remplirait plus son rôle protecteur et tenseur. L'effet esthétique serait de toute manière selon toute probabilité peu avantageux.

C'est la raison pour laquelle, les mailles ajourées présentent en réalité des ouvertures de petite dimension, de l'ordre de 0,1 à 0,5 mm.

Selon une possibilité, le tissu en mailles et la structure tridimensionnelle matelassée sont fabriqués en polyester.

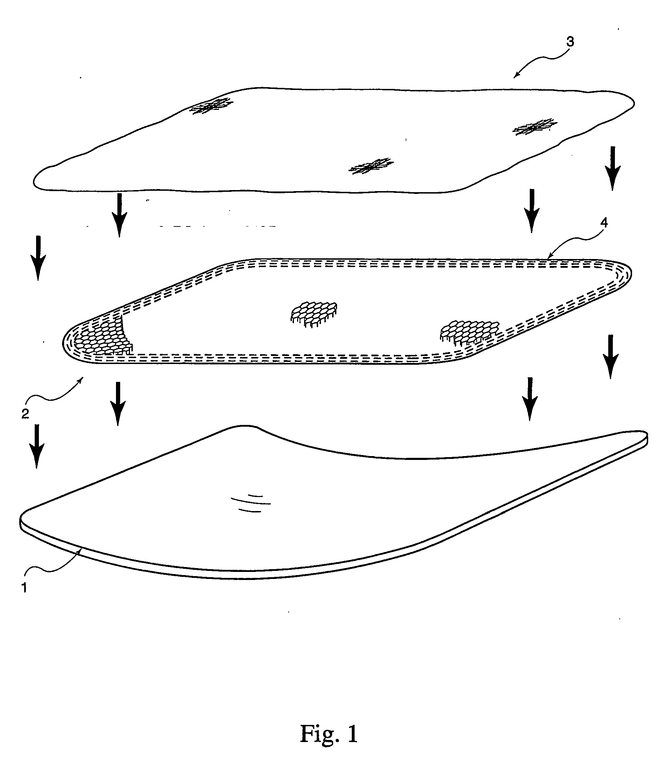

L'invention va à présent être décrite plus en détail, en référence à l'unique figure 1 placée en annexe.

Cette figure montre la constitution d'un dossier de siège recouvert d'un revêtement matelassé selon la présente invention.

Le support (1) sur lequel ledit revêtement est appliqué se présente sous la forme d'une plaque, par exemple en plastique, à laquelle a été conféré un galbe lui permettant de s'adapter notamment à la forme d'un dos. La plaque constituant ce support (1) est d'épaisseur réduite (quelques millimètres) qui lui autorise une certaine souplesse. Elle peut en effet être déformée, notamment lorsqu'elle subit des flexions transversales. Cette flexibilité est nécessaire pour satisfaire à un certain niveau de confort.

L'objet de l'invention est en réalité constitué par le matériau matelassé (2) qui surmonte ledit support, combiné à un tissu (3) en mailles ajourées semi-transparent qui est destiné à recouvrir le matériau matelassé (2). Ce dernier est fabriqué en un matériau synthétique présentant une structure en nid d'abeille dont les cellules se développent axialement selon l'épaisseur du matelas.

Ladite configuration en nid d'abeille comporte une multitude de tubes adjacents dont les bords libres forment des motifs identiques d'allure hexagonale. Cette structure tubulaire, en nid d'abeilles est connue en soi. Elle présente, au moins dans son épaisseur, une élasticité qui vise à augmenter le confort du revêtement matelassé de l'invention dans sa fonction d'appui d'une partie du corps. En particulier, la structure en nid d'abeille, du fait de sa géométrie particulière est connue pour offrir un excellent support par exemple pour le dos des utilisateurs, alliant à la fois fermeté et souplesse pour l'obtention d'un confort maximal.

La périphérie du matériau matelassé (2) présente plusieurs lignes de couture concentriques (4). Le fait de coudre cette zone périphérique confère au matériau matelassé (2) des bordures aplanies, alors que la zone centrale conserve sa structure tubulaire présentant par conséquent une certaine épaisseur.

La zone périphérique aplanie est avantageuse pour plusieurs raisons. En premier lieu, elle confère une plus grande flexibilité permettant au matériau matelassé (2) d'être fixé au support (1) dans des conditions que l'on verra plus en détail ci-après. En second lieu, l'existence des bordures périphériques aplanies facilite la fixation du tissu en maille (3) sur le matériau matelassé (2) du fait de la stabilité accrue des bordures. La fixation de l'un à l'autre est en effet limitée à cette zone, ce qui fait que le revêtement matelassé de l'invention, qui se compose du matériau matelassé (2) et du tissu en mailles ajourées (3), ne possède une cohésion par fixation que dans sa zone périphérique.

Dans un premier temps, selon l'invention, le matériau matelassé (2) et le tissu (3) sont solidarisés l'un à l'autre, de préférence par soudage, par exemple par ultrasons.

La zone périphérique aplanie, dont on a mentionné le fait qu'elle est beaucoup plus flexible que la zone centrale, est ensuite repliée autour des bords du support (1), qui est fixé sur le verso dudit support (1). Cette fixation se fait par exemple par agrafage, bien que d'autres procédés mécaniques soient également possibles.

A la suite de cette fixation, seule la partie matelassée du revêtement ainsi constitué se retrouve sur le recto du support rigide (1), car le positionnement de la ligne de couture intérieure, qui définit le domaine de centrage, reprend sensiblement les dimensions externes du support (1). La partie aplanie est donc quasi exclusivement destinée à être repliée autour des bords du support (1).

Comme cela apparaît sur la figure, les mailles du tissu (3) se retrouvent placées au débouché des tubes de la structure matelassée (2).

Cela permet, outre d'augmenter la respiration du revêtement, de piéger d'éventuelles micro particules du type poussière, qui peuvent s'introduire dans lesdits tubes à travers les interstices desdites mailles. Ces poussières ne sont alors plus visibles en surface, ce qui contribue à rendre l'apparence du revêtement de l'invention plus présentable en toutes circonstances.

Enfin, la combinaison entre le tissu en maille et la structure tridimensionnelle du matériau matelassé présente en soi un avantage esthétique indéniable. Celui-ci peut être rehaussé par des jeux de couleurs, par exemple lorsque la couleur choisie pour le tissu ajouré est différente de celle qui est sélectionnée pour la mousse tridimensionnelle (2), ou à tout le moins pour ses bords libres disposés au contact dudit tissu (3). Il est ainsi possible de jouer sur les contrastes de couleurs, voire d'améliorer encore les effets esthétiques en utilisant différentes couleurs pour la structure tridimensionnelle disposée derrière le tissu en mailles (3), afin d'y laisser transparaître des logos, images, etc...

## Revendications

1. Procédé de fabrication d'un revêtement matelassé destiné à recouvrir des parties de sièges par exemple du type dossiers, appuis-tête ou accotoirs, **caractérisé en ce qu'**il consiste à :
- découper, dans un matériau matelassé (2) du type mousse tridimensionnelle présentant une élasticité au moins dans son épaisseur, une pièce de forme adaptée à revêtir la partie de siège à recouvrir ;
- coudre, au niveau des bordures de ladite pièce, au moins deux lignes concentriques (4) sur toute la périphérie de la pièce, de manière à aplanir la zone de bordure ;
- découper, dans un tissu (3) en mailles ajourées semi-transparent, une pièce de dimensions correspondant à celles de la pièce matelassée ;
- superposer la pièce en tissu (3) semi-transparent sur la pièce matelassée (2) ; et
- fixer la pièce en tissu (3) semi-transparent sur la pièce matelassée (2) au niveau de la zone aplanie de couture périphérique.

2. Procédé de fabrication d'un revêtement matelassé selon la revendication précédente, **caractérisé en ce que** la pièce matelassée (2) est revêtue d'une pluralité de lignes de couture (4) concentriques au niveau de ses bordures.

3. Procédé de fabrication d'un revêtement matelassé selon l'une des revendications 1 et 2, **caractérisé en ce que** la pièce matelassée (2) présente une structure tridimensionnelle basée sur des tubes adjacents s'étendant axialement selon l'épaisseur du matériau matelassé (2).

4. Procédé de fabrication d'un revêtement matelassé selon la revendication précédente, **caractérisé en ce que** la pièce en tissu (3) semi-transparent recouvre les bords libres des parois délimitant les tubes adjacents, au débouché des évidements que constituent les tubes.

5. Procédé de fabrication d'un revêtement matelassé selon la revendication précédente, **caractérisé en ce que** les bords libres des parois délimitant les tubes forment des motifs adjacents identiques se répétant sur toute la surface à couvrir par le tissu (3) semi-transparent.

6. Procédé de fabrication d'un revêtement matelassé selon la revendication précédente, **caractérisé en ce que** lesdits motifs adjacents présentent une configuration en nid d'abeilles.

7. Procédé d'assemblage d'un revêtement matelassé fabriqué selon les revendications précédentes à un support (1) rigide ou semi-rigide de type dossier de siège, appui-tête ou accotoir, **caractérisé en ce qu'**il consiste à :
- fabriquer un revêtement matelassé (2) présentant des lignes de couture périphériques (4) dont la forme correspond sensiblement à celle du support (1), la ligne la plus interne étant localisée de façon qu'elle suive approximativement le contour dudit support (1) ;
- disposer le revêtement matelassé (2) sur la face recto du support (1) à revêtir en le centrant à l'intérieur de la zone aplanie des lignes de couture (4) ;
- replier les bordures aplanies par les lignes de couture (4) autour des bords du support (1) pour les plaquer contre le verso dudit support (1) ;
- fixer lesdites bordures aplanies sur la verso du support (1).

8. Procédé d'assemblage d'un revêtement matelassé selon la revendication précédente, **caractérisé en ce que** les bordures aplanies sont agrafées sur le verso du support (1) rigide.

9. Revêtement matelassé pour couvrir des parties de siège du type dossier, appui-tête ou accotoir, obtenu selon le procédé des revendications 1 à 6, **caractérisé en ce qu'**il est constitué d'un matériau matelassé (2) du type mousse tridimensionnelle présentant une élasticité au moins dans son épaisseur, recouvert d'un tissu (3) en maille ajourées semi-transparent, le matériau matelassé (2) présentant une structure tridimensionnelle au moins partiellement visible à travers ledit tissu (3) et comportant des évidements débouchant au contact du tissu (3).

10. Revêtement matelassé selon la revendication précédente, **caractérisé en ce que** la structure tridimensionnelle est constituée de tubes adjacents s'étendant axialement selon l'épaisseur du matériau et dont les bords libres disposés au contact du tissu (3) en mailles forment des motifs identiques se répétant sur toute la surface du matériau matelassé (2).

11. Revêtement matelassé selon la revendication précédente, **caractérisé en ce que** les motifs répétitifs des bords libres de la structure tubulaire forment une configuration en nid d'abeilles.

12. Revêtement matelassé selon l'une quelconque des revendications 9 à 11, **caractérisé en ce que** les bordures du matériau matelassé (2) sont aplanies par au moins deux lignes concentriques (4) de couture, le tissu (3) à maille étant fixé audit matériau dans cette zone de couture.

13. Revêtement matelassé selon la revendication précédente, **caractérisé en ce qu'**il comporte une pluralité de lignes de couture (4).

14. Revêtement matelassé selon la revendication précédente, **caractérisé en ce que** le nombre de lignes (4) est choisi entre cinq et dix.

15. Revêtement matelassé selon l'une des revendications 12 à 14, **caractérisé en ce que** la fixation du tissu (3) à mailles sur le matériau matelassé (2) est réalisée par soudage, par exemple par ultrasons.

16. Revêtement matelassé selon l'une quelconque des revendications 9 à 15, **caractérisé en ce que** les mailles ajourées présentent des ouvertures de l'ordre de 0,1 mm à 0,5 mm.

17. Revêtement matelassé selon l'une quelconque des revendications 9 à 16, **caractérisé en ce que** le tissu (3) en maille et le matériau matelassé (2) sont fabriqués en polyester.

18. Supports d'appui formant des parties de sièges du type dossier, appui-tête ou accotoirs munis d'un revêtement matelassé (2) selon les revendications 9 à 17, **caractérisés en ce qu'**ils se composent :
- d'une structure support (1) rigide ou semi-rigide ;
- d'un matériau matelassé (2) de type mousse doté d'une élasticité au moins dans son épaisseur, et présentant une structure tridimensionnelle pourvue d'évidements ;
- d'un tissu (3) semi-transparent en mailles ajourées recouvrant une face du matériau matelassé (2), au contact des ouvertures desdits évidements ;
le matériau matelassé (2) et le tissu (3) semi-transparent formant ledit revêtement matelassé prévu pour revêtir un côté de la structure support (1).

19. Supports d'appui selon la revendication précédente, **caractérisés en ce que** la structure tridimensionnelle constituant le matériau matelassé (2) est constituée de tubes adjacents s'étendant axialement selon l'épaisseur du matériau, dont les bords libres délimitant les ouvertures forment des motifs identiques se répétant sur toute la surface du matériau matelassé (2) en contact avec le tissu (3) semi-transparent.

20. Supports d'appui selon la revendication précédente, **caractérisés en ce que** les motifs répétitifs des bords libres de la structure tubulaire forment une configuration en nid d'abeilles.

21. Supports d'appui selon l'une des revendications 18 à 20, **caractérisés en ce que** les mailles ajourées présentent des ouvertures de l'ordre de 0,1 à 0,5 mm.

22. Supports d'appui selon l'une quelconque des revendications 18 a 21, **caractérisés en ce que** le tissu (3) en maille et le matériau matelassé (2) sont fabriqués en polyester.

## Claims

1. Method for manufacturing a padded covering designed to cover chair parts, for example of the backrest, headrest or armrest type, **characterised in that** it consists in:
- cutting out, from a padded material (2) of the three-dimensional foam type having a resilience at least in its thickness, a part having a shape adapted to cover the chair part to be covered;
- stitching, in the region of the borders of said part, at least two concentric lines (4) over the entire periphery of the part, so as to flatten the border area;
- cutting out, from a semi-transparent openwork mesh fabric (3), a part having dimensions corresponding to those of the padded part;
- superposing the part made of semi-transparent fabric (3) onto the padded part (2); and
- fixing the part made of semi-transparent fabric (3) to the padded part (2) in the region of the flattened area of peripheral stitching.

2. Method for manufacturing a padded covering according to the preceding claim, **characterised in that** the padded part (2) is covered by a plurality of concentric stitching lines (4) in the region of its borders.

3. Method for manufacturing a padded covering according to one of Claims 1 and 2, **characterised in that** the padded part (2) has a three-dimensional structure based on adjacent tubes extending axially along the thickness of the padded material (2).

4. Method for manufacturing a padded covering according to the preceding claim, **characterised in that** the part made of semi-transparent fabric (3) covers the free edges of the walls defining the adjacent tubes, at the outlet of recesses which the tubes form.

5. Method for manufacturing a padded covering according to the preceding claim, **characterised in that** the free edges of the walls defining the tubes form identical adjacent patterns which are repeated over the entire surface to be covered by the semi-transparent fabric (3).

6. Method for manufacturing a padded covering according to the preceding claim, **characterised in that** said adjacent patterns have a honeycomb configuration.

7. Method for assembling a padded covering, manufactured according to the preceding claims, to a rigid or semi-rigid support (1) of the chair backrest, headrest or armrest type, **characterised in that** it consists in:
- manufacturing a padded covering (2) having peripheral stitching lines (4) of which the shape corresponds substantially to that of the support (1), the innermost line being located so that it approximately follows the contour of said support (1);
- arranging the padded covering (2) on the front face of the support (1) to be covered, by centring said padded covering within the flattened area of the stitching lines (4);
- folding back the borders flattened by the stitching lines (4) around the edges of the support (1) to flatten them against the rear face of said support (1) ;
- fixing said flattened borders to the rear face of the support (1).

8. Method for assembling a padded covering according to the preceding claim, **characterised in that** the flattened borders are stapled to the rear face of the rigid support (1).

9. Padded covering to cover chair parts of the backrest, headrest or armrest type, obtained according to the method of Claims 1 to 6, **characterised in that** it consists of a padded material (2) of the three-dimensional foam type, having a resilience at least in its thickness, covered by a semi-transparent openwork mesh fabric (3), the padded material (2) having a three-dimensional structure which is at least partially visible through said fabric (3) and comprising recesses which are apparent on contact with the fabric (3).

10. Padded covering according to the preceding claim, **characterised in that** the three-dimensional structure consists of adjacent tubes extending axially along the thickness of the material and of which the free edges arranged in contact with the mesh fabric (3) form identical patterns which are repeated over the entire surface of the padded material (2).

11. Padded covering according to the preceding claim, **characterised in that** the repeated patterns of the free edges of the tubular structure form a honeycomb configuration.

12. Padded covering according to any one of Claims 9 to 11, **characterised in that** the borders of the padded material (2) are flattened by at least two concentric stitching lines (4), the mesh fabric (3) being fixed to said material in said stitching area.

13. Padded covering according to the preceding claim, **characterised in that** it comprises a plurality of stitching lines (4).

14. Padded covering according to the preceding claim, **characterised in that** the number of lines (4) is selected to be between five and ten.

15. Padded covering according to one of Claims 12 to 14, **characterised in that** the fixing of the mesh fabric (3) to the padded material (2) is carried out by welding, for example by ultrasound.

16. Padded covering according to any one of Claims 9 to 15, **characterised in that** the openwork mesh has openings in the order of 0.1 mm to 0.5 mm.

17. Padded covering according to any one of Claims 9 to 16, **characterised in that** the mesh fabric (3) and the padded material (2) are manufactured from polyester.

18. Bearing supports forming chair parts of the backrest, headrest or armrest type, provided with a padded covering (2) according to Claims 9 to 17, **characterised in that** they are composed of:
- a rigid or semi-rigid support structure (1);
- a padded foam-type material (2) provided with a resilience at least in its thickness, and having a three-dimensional structure provided with recesses;
- a semi-transparent openwork mesh fabric (3), covering one face of the padded material (2) in contact with the openings of said recesses;
the padded material (2) and the semi-transparent fabric (3) forming said padded covering, provided for covering one side of the support structure (1).

19. Bearing supports according to the preceding claim, **characterised in that** the three-dimensional structure forming the padded material (2) consists of adjacent tubes extending axially along the thickness of the material, of which the free edges defining the openings form identical patterns which are repeated over the entire surface of the padded material (2) in contact with the semi-transparent fabric (3).

20. Bearing supports according to the preceding claim, **characterised in that** the repeated patterns of the free edges of the tubular structure form a honeycomb configuration.

21. Bearing supports according to one of Claims 18 to 20, **characterised in that** the openwork mesh has openings in the order of 0.1 to 0.5 mm.

22. Bearing supports according to any one of Claims 18 to 21, **characterised in that** the mesh fabric (3) and the padded material (2) are manufactured from polyester.

## Patentansprüche

1. Verfahren für die Herstellung eines Polsterbezugs, der dazu vorgesehen ist, Teile von Sitzen beispielsweise des Typs Rückenlehne, Kopfstütze oder Armlehne abzudecken,
**dadurch gekennzeichnet, dass** es darin besteht:
- aus einem Polstermaterial (2) des Typs dreidimensionaler Schaumstoff, der zumindest in seiner Dickenrichtung eine Elastizität aufweist, ein Teil mit einer Form auszuschneiden, die geeignet ist, den abzudeckenden Sitzteil zu beziehen;
- auf Höhe der Ränder des Teils wenigstens zwei konzentrische Linien (4) auf dem gesamten Umfang des Teils zu nähen, derart, dass die Randzone eingeebnet wird;
- aus einem halbdurchlässigen Gewebe (3) aus durchbrochenen Maschen ein Teil mit Abmessungen, die jenen des Polsterteils entsprechen, auszuschneiden;
- das halbdurchlässige Gewebeteil (3) auf dem Polsterteil (2) anzuordnen; und
- das Teil aus halbdurchlässigem Gewebe (3) auf Höhe der eingeebneten Umfangsnahtzone an dem Polsterteil (2) zu fixieren.

2. Verfahren zum Herstellen eines Polsterbezugs nach dem vorhergehenden Anspruch, **dadurch gekennzeichnet, dass** das Polsterteil (2) auf Höhe seiner Ränder mit mehreren konzentrischen Nahtlinien (4) umgeben ist.

3. Verfahren zur Herstellung eines Polsterbezugs nach einem der Ansprüche 1 und 2, **dadurch gekennzeichnet, dass** das Polsterteil (2) eine dreidimensionale Struktur aufweist, die auf benachbarten Röhren beruht, die sich in Dickenrichtung des Polstermaterials (2) axial erstrecken.

4. Verfahren zur Herstellung eines Polsterbezugs nach dem vorhergehenden Anspruch, **dadurch gekennzeichnet, dass** das Teil aus halbdurchlässigem Gewebe (3) die freien Ränder der Wände, die die benachbarten Röhren begrenzen, an der Öffnung der Aussparungen, die die Röhren bilden, abdeckt.

5. Verfahren zur Herstellung eines Polsterbezugs nach dem vorhergehenden Anspruch, **dadurch gekennzeichnet, dass** die freien Ränder der Wände, die die Röhren begrenzen, gleiche benachbarte Muster bilden, die sich auf der gesamten Oberfläche, die mit dem halbdurchlässigen Gewebe (3) abzudecken ist, wiederholen.

6. Verfahren zur Herstellung eines Polsterbezugs nach dem vorhergehenden Anspruch, **dadurch gekennzeichnet, dass** die benachbarten Muster eine Bienenwabenkonfiguration aufweisen.

7. Verfahren zum Anbringen eines Polsterbezugs, der gemäß den vorhergehenden Ansprüchen hergestellt wird, auf einem starren oder halbstarren Träger (1) des Typs Sitzrückenlehne, Kopfstütze oder Armlehne, **dadurch gekennzeichnet, dass** es darin besteht:
- einen Polsterbezug (2) herzustellen, der Umfangsnahtlinien (4) aufweist, deren Form im Wesentlichen jener des Trägers (1) entspricht, wobei die innerste Linie so angeordnet ist, dass sie ungefähr dem Umriss des Trägers (1) folgt;
- Anordnen des Polsterbezugs (2) auf der Vorderseite des zu beziehenden Trägers (1), indem er innerhalb der eingeebneten Zone der Nahtlinien (4) konzentriert wird;
- die durch die Nahtlinien (4) eingeebneten Ränder um die Kanten des Trägers (1) umzufalten, um sie gegen die Rückseite des Trägers (1) zu drücken;
- die eingeebneten Ränder an der Rückseite des Trägers (1) zu fixieren.

8. Verfahren zum Anbringen eines Polsterbezugs nach dem vorhergehenden Anspruch, **dadurch gekennzeichnet, dass** die eingeebneten Ränder an der Rückseite des starren Trägers (1) verklammert werden.

9. Polsterbezug zum Abdecken von Sitzteilen des Typs Rückenlehne, Kopfstütze oder Armlehne, der gemäß dem Verfahren nach den Ansprüchen 1 bis 6 erhalten wird, **dadurch gekennzeichnet, dass** er aus einem Polstermaterial (2) gebildet ist, das eine Elastizität zumindest in seiner Dickenrichtung aufweist und vom Typ dreidimensionaler Schaumstoff ist, der mit einem halbdurchlässigen Gewebe (3) mit durchbrochenen Maschen abgedeckt ist, wobei das Polstermaterial (2) eine dreidimensionale Struktur aufweist, die durch das Gewebe (3) wenigstens teilweise sichtbar ist und Aussparungen aufweist, die in einen Kontakt mit dem Gewebe (3) münden.

10. Polsterbezug nach dem vorhergehenden Anspruch, **dadurch gekennzeichnet, dass** die dreidimensionale Struktur aus benachbarten Röhren gebildet ist, die sich in Dickenrichtung des Materials axial erstrecken und deren freien Ränder, die in Kontakt mit dem Maschengewebe (3) angeordnet sind, gleiche Muster bilden, die sich auf der gesamten Oberfläche des Polstermaterials (2) wiederholen.

11. Polsterbezug nach dem vorhergehenden Anspruch, **dadurch gekennzeichnet, dass** die sich wiederholenden Muster der freien Ränder der röhrenförmigen Struktur eine Bienenwabenkonfiguration bilden.

12. Polsterbezug nach einem der Ansprüche 9 bis 11, **dadurch gekennzeichnet, dass** die Ränder des Polstermaterials (2) durch wenigstens zwei konzentrische Nahtlinien (4) eingeebnet sind, wobei das Maschengewebe (3) in dieser Nahtzone an dem Material befestigt ist.

13. Polsterbezug nach dem vorhergehenden Anspruch, **dadurch gekennzeichnet, dass** er mehrere Nahtlinien (4) umfasst.

14. Polsterbezug nach dem vorhergehenden Anspruch, **dadurch gekennzeichnet, dass** die Anzahl der Linien (4) im Bereich von fünf bis zehn gewählt ist.

15. Polsterbezug nach einem der Ansprüche 12 bis 14, **dadurch gekennzeichnet, dass** die Befestigung des Maschengewebes (3) an dem Polstermaterial (2) durch Schweißen, beispielsweise durch Ultraschallschweißen, ausgeführt ist.

16. Polsterbezug nach einem der Ansprüche 9 bis 15, **dadurch gekennzeichnet, dass** die durchbrochenen Maschen Öffnungen in der Größenordnung von 0,1 mm bis 0,5 mm aufweisen.

17. Polsterbezug nach einem der Ansprüche 9 bis 16, **dadurch gekennzeichnet, dass** das Maschengewebe (3) und das Polstermaterial (2) aus Polyester hergestellt sind.

18. Abstützträger, die Sitzteile des Typs Rückenlehne, Kopfstütze oder Armlehne bilden und mit einem Polsterbezug nach den Ansprüchen 9 bis 17 versehen sind, **dadurch gekennzeichnet, dass** sie gebildet sind aus:
- einer starren oder halbstarren Tragstruktur (1);
- einem Polstermaterial des Typs Schaumstoff, der mit einer Elastizität zumindest in seiner Dickenrichtung versehen ist und eine mit Aussparungen versehene dreidimensionale Struktur aufweist;
- einem halbdurchlässigen Gewebe (3) mit durchbrochenen Maschen, das eine Seite des Polstermaterials (2) in Kontakt mit den Öffnungen der Aussparungen abdeckt;
wobei das Polstermaterial (2) und das halbdurchlässige Gewebe (3) den Polsterbezug bilden, der dazu vorgesehen ist, eine Seite der Tragstruktur (1) zu überziehen.

19. Abstützträger nach dem vorhergehenden Anspruch, **dadurch gekennzeichnet, dass** die dreidimensionale Struktur, die das Polstermaterial (3) bildet, aus benachbarten Röhren gebildet ist, die sich in Dickenrichtung des Materials axial erstrecken und deren freie Ränder, die die Öffnungen begrenzen, gleiche Muster bilden, die sich auf der gesamten Oberfläche des Polstermaterials (2), die mit dem halbdurchlässigen Gewebe (3) in Kontakt ist, wiederholen.

20. Abstützträger nach dem vorhergehenden Anspruch, **dadurch gekennzeichnet, dass** die sich wiederholenden Muster der freien Ränder der röhrenförmigen Struktur eine Bienenwabenkonfiguration bilden.

21. Abstützträger nach einem der Ansprüche 18 bis 20, **dadurch gekennzeichnet, dass** die durchbrochenen Maschen Öffnungen in der Größenordnung von 0,1 bis 0,5 mm aufweisen.

22. Abstützträger nach einem der Ansprüche 18 bis 21, **dadurch gekennzeichnet, dass** das Maschengewebe (3) und das Polstermaterial (2) aus Polyester hergestellt sind.
